(19) Europäisches Patentamt
European Patent Office
Office européen des brevets

(11) Publication number: **0 134 435**
**B1**

(12) # EUROPEAN PATENT SPECIFICATION

(45) Date of publication of patent specification: **19.10.88**

(51) Int. Cl.[4]: **C 22 B 3/00**

(21) Application number: **84106957.8**

(22) Date of filing: **18.06.84**

(54) **A process for the recovery of valuable metals from the ashes of normal and complex pyrites.**

(30) Priority: **07.07.83 ES 523935**

(43) Date of publication of application: **20.03.85 Bulletin 85/12**

(45) Publication of the grant of the patent: **19.10.88 Bulletin 88/42**

(84) Designated Contracting States: **AT BE CH DE FR GB IT LI LU NL SE**

(58) References cited:
**DE-C- 209 508**
**DE-C- 307 085**
**DE-C- 312 384**
**DE-C- 501 613**
**FR-A- 627 630**
**FR-A- 820 247**

**ERZMETALL, vol. 20, no. 11, November 1967, Stuttgart; H. SCHACKMANN "Neuere Entwicklung bei der Aufarbeitung NE-metallhaltiger Schwefelkiesabbrände", pages 499-511**

(73) Proprietor: **COMPANIA ESPANOLA DE MINAS DE THARSIS, S.A.**
**Nunez de Balboa, no. 120, 7o**
**Madrid 6 (ES)**

(72) Inventor: **Nunez Alvarez, Carlos**
**Calle Bruch No. 90**
**Barcelona (ES)**
Inventor: **Vinals Olia, Juan**
**Calle Isaac Peral No. 16 Vilanova y la Geltrú**
**Barcelona (ES)**

(74) Representative: **Prato, Roberto et al**
**c/o Ingg. Carlo e Mario Torta Via Viotti 9**
**I-10121 Torino (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to the recovery of the valuable metals copper, silver, gold, zinc and other, all contained in the iron-containing ashes of polymetallic sulfide containing massive ores in general, as well as ashes from residues of the sulfating roasting or firing and the residues produced by the natural change of said sulfides, by means of a non-integrated and of low cost process. Without any limitation, and only for the sake of brevity, in this invention reference will be made to the words "ashes of normal and complex pyrites" to indicate the starting material.

The integrated processes, generally of the pyrometallurgical type, mainly focussed on the recovery of the iron oxides, have encountered many difficulties, due to the high costs and to the requirements of the iron and steel industry, both concerning the quality of the iron oxides and the prices. On the other hand, the rise and the maintenance of the prices of metals such as gold, silver, copper, etc., have made interesting the idea of a process which allows the extraction of these metals at a low production cost without the necessity of the recovery of the iron oxides. Therefore such a low cost, not integral process constitutes the object of the present invention.

A survey of patent bibliography and of hydrometallurgical researches in the field of pyrite ashes results in documents that go back to the first quarter of the century. This is the case of patents DE—C—307.085 and FR—A—820.247; in the first patent mentioned, chlorine is used as a leaching agent, while calcium chloride is used in the second. On the other hand, an examination of the investigations in this field reveals the existence of a series of differences and anomalies in their results.

It was proved that these anomalies were due to ignorance of the phases which contained valuable metals as well as of a suitable means for their release. Consequently, reagents such as chlorine or hypochlorite, and others, already proposed as of last century, could not be the base for any useful hydrometallurgical low-cost process. This is the case of the Plattner process, which uses calcium hypochlorite to dissolve gold and other raw materials.

Therefore, according to this invention, there is provided a process for the recovery of valuable metals, such as copper, silver, gold, zinc and other metals values from iron-containing ashes of normal and complex pyrites, characterized in that it comprises the following working steps:

a. subjecting the ashes to grinding in order to comminute them to a size less than 90 microns, at least 50% in weight of the solids having a dimension less than 25 microns;

b. preparing with the ashes so ground a slurry with water or with the liquid of recycling and washing from step (e);

c. treating the slurry with a leaching agent selected from chlorine or hypochlorites, in order to dissolve the sulphide phases, the oxides of valuable metals and noble metals, while the iron oxides and the ferrites or the pseudo-ferrites remain undissolved;

d. separating the so treated ashes from the slurry liquid containing the valuable metals;

e. subjecting the separated ashes to one or more washing steps with water or with recycled liquids from step (h) and recycling the washing liquids to step (b);

f. either treating the liquids coming from (d) first in a preliminary step of elimination and separation of solubilised iron and impurities through the addition of basic substances to first neutralize the acidity of liquids stemming from the leaching reaction with chlorine in step (c) and subsequently precipitate the dissolved iron with entrainment of substantially all the arsenic and removal of residual chlorine, and thereafter sending to purified liquids to a cementation step (g);

g. or directly treating the liquids without prior purification step, in a cementation step to precipitate the valuable metals by adding a suitable metallic cementation agent so as to obtain a liquid substantially devoid of valuable metals and a precipitated shell of metal values;

h. treating the liquids coming from step (g) with a base to recover zinc and iron solubilised during cementation step by precipitation of hydroxides of zinc or iron, as well as the last fractions of lead and other minor elements;

i. separating the precipitate of step (h) from the liquid and recycling said liquid to step (e) as washing liquid;

j. treating the separated precipitate with sulfuric acid to recover the zinc contained therein as Zn-sulfate.

To be able to subject said ashes to this process, it is necessary to grind and crush them to a size less than 90 micrometers and at least 50% by weight of the solids must be below 25 micrometers, otherwise these reagents are not able to extract the valuable metals in a proportion which can be profitable.

A suitable size distribution, according to the concepts of the above paragraph, for the ashes of pyrites, is presented in the following table:

TABLE I

| Size in µm | % of Residue Partial | % of Residue Global |
|---|---|---|
| 90 | 0 | 0 |
| 63 | 21 | 21 |
| 40 | 11 | 32 |
| 25 | 17 | 49 |
| less 25 | 51 | 51 |

Due to the crumbly character of the ashes, these size requirements are obtainable without difficulty and at a low cost.

Once the ashes of pyrites are properly ground, a slurry is prepared (for example 1:2, one part solids for two parts liquid), and treated at room temperature with chlorine or hypochlorites, and with the above-mentioned size distribution the reagent is truly efficient. Therefore, in addition to its ability known for leaching gold, which is the only reason for its use as a reagent in other cases, here it is in fact suggested for other not less interesting reactions, which are:

dissolution of the sulfide-containing phases

$$MeS+4\ Cl_2+4\ H_2O \rightarrow Me^{2+}+SO_4^{2-}+8Cl^-+8H^+ \quad (1)$$

dissolution of the oxides of the valuable metals through the acidity produced in the reaction (1)

$$MeO+2\ H^+ \rightarrow Me^{2+}+H_2O \quad (2)$$

complexation reactions which support the leaching starting from the chlorides produced in the reaction (1)

$$Ag^++2\ Cl^- \rightarrow AgCl^{2-} \quad (3)$$

$$Me^{2+}+4\ Cl^- \rightarrow MeCl_4^{2-} \quad (4)$$

and the known reaction of dissolution of the noble metals

$$Au+3/2\ Cl_2+Cl^- \rightarrow AuCl_4^-. \quad (5)$$

The iron oxides and the ferrites or the pseudoferrites do not dissolve in this leaching agent at room temperature.

All these reactions, which are effective only when the ashes are well liberated with a proper grinding, are those which allow a high percentage of dissolution of the valuable metals, such as gold, silver, copper, zinc, lead, etc., while there is practically no dissolution of the iron oxides, which in other processes, acidic-oxidizing, and especially at high temperatures, dissolve in substantial quantities rendering little reliable and difficult the recovery of the valuable metals from the solutions, whereas according to the process of the invention said recovery is substantially cheap.

The process according to the invention will be described below with reference to the accompanying drawing, which represents the flow chart of the operative steps of said process.

The first step comprises the grinding (1) of the ashes of the pyrites (2) in order to obtain the proper size distribution. In the case the ashes of pyrites contain a high percentage of sulphur, as in the case of the ashes resulting from the firing in stage ovens, according to the invention it is proposed, in order to reduce to a minimum the chlorine consumption, that before said grinding (1) a screening and a reject (3) will be made of the coarser fractions of the ashes, which are about 3 mm, that have a high content of sulphur, and this entails the rejection of a percentage by weight very low in comparison with the total weight of the ashes and consequently through a simple screening it is possible to desulphurize the charge to about 40%, before the grinding step (1).

In addition to this foregoing screening, for the ashes of stage ovens rich in iron sulphide not fully fired, it is proposed to further treat said ashes already ground in a rod mill (3′). As a result of the higher plasticity of the residual iron sulphide, they are laminated in this step and form large shapes which can be separated in a further screening, obtaining as a consequence a desulphurization still more complete, after which the grinding step is carried out (1) as far as the size distribution given in Table 1.

Secondly, with the ashes duly reduced as said, a slurry is prepared in (4) with water or, better than with water, with the liquids of recycling and washing (5), slurry which is trated with the leaching agent (6), that can be chlorine or hypochlorites, as described.

Thirdly, accomplished the described reactions, the slurry goes to a separation step (7) of the ashes treated with the liquids containing the valuable metals. These liquids (8) go on to an elimination and separation step of the impurities (9), while the treated ashes proceed to a washing step (10) with water or better with a recycling liquid (11), in order to recover the valuable metals contained in the liquid soaking the slurry of the treated ashes. This washing water of the treated ashes, returns (5) to the reactor (4) in order to from fresh slurry with other fresh ashes. The slurry of the treated ashes after the washing forms a residue (12) which in the soaking liquid involves a loss of not even 2% of the leached valuable metals. This residue is a non polluting residue and being impregnated with chlorides it can be useful for further processes.

According to reaction (1), the liquids of the reactor (4) attain an acidic pH, similarly if hypochlorites are used, there is also an acidity produced, but this is lower.

Fourthly, the liquids (8) containing the valuable metals proceed to the step of elimination and separation of the impurities (9). In this step (9), said elimination can be done with the addition of basic substances (13), such as: oxides, hydroxides, carbonates, etc. of alkaline or alkaline-earth metals, or of other metals, such as zinc oxide, hydroxide or carbonate, etc. In this invention for reasons of low cost it is proposed the use of calcium oxide or carbonate, although the use of recycled zinc hydroxide (13') produces economical solutions very interesting, since this zinc hydroxide is produced in the present process.

In this step of elimination and separation of the impurities (9), the calcium carbonate or the calcium oxide neutralizes firstly the acidity produced by the liquids and thereafter with the increase of the pH till 2,5—3, precipitates (14) the small quantities of the iron in solution, precipitation which causes the entrainment practically complete of the arsenic. The reactions are the following:

$$2\ ClH+CO_3Ca \rightarrow Cl_2Ca+CO_2+H_2O \quad (6)$$

$$2Fe^{3+}+3CO_3Ca+H_2O \rightarrow 2FeO(OH)+3CO_2+3Ca^{2+}. \quad (7)$$

The evolution of carbon dioxide, reaction (6), eliminates by entrainment the last traces of chlorine and produces the precipitation of a fraction of the lead as chloride, all of which represents in a simple operation at room temperature, a very good elimination of iron, arsenic, other impurities and the last traces of chlorine, that would negatively interfere with the yield of the following operations.

The just described fourth stage, although useful, can be omitted in those cases in which the liquids (8) coming from the solid-liquid separation (7), contain low acid, iron and arsenic concentration, thus going directly to the cementation step (15).

The fifth step comprises the cementation (15) of the liquids whether purified or not (8). In the case in which it is followed the route of the purification (9) of the liquids (8), the pH of the solutions is 2,5 to 3, and at this point it is possible to proceed (or not) to a small addition of hydrochloric acid to reduce the pH to 2. This route has the object of producing a "shell" of valuable metals of the best quality (22). The cementation can be carried out with iron, zinc, lead, etc. (16). It is also possible optionally to carry out a "fractional" cementation, in such a way as to cement with impure recycled shell, that is take the impure shell from the cementation of the final stage and add it to the first cementation tank where the liquids charged with valuable metals enter, wherefore the metals starting to cement in this first tank give a shell having the highest quality and a high yield in noble metals.

In the following cementation tanks, the liquids cemented with iron, zinc or lead, etc., are exhausted.

In the cementation with iron of purified liquids and with a pH of 2,5 to 3, there is a consumption of about 0,62 kgs of iron for every 100 kgs of ashes, and in the optional modification of cementation of liquids without elimination of the impurities, the consumption is of 1,26 kgs of iron for every 100 kgs of ashes.

The quantity of recovered copper, silver and gold is 80% for each metal and relative to the contents of these metals in the starting ashes.

The liquids at the exit from the cementation, practically devoid of valuable metals, can be discarded, but for a maximum economy of the process it is proposed a sixth and last step. In this step (17) washing liquid (18'), preferably water and a base (18) are added to the liquids, preferably starting with calcium carbonate and ending with the addition of a base such as calcium oxide which is somewhat cheaper. In this way it is obtained the precipitation (19) of the zinc hydroxides and the iron hydroxide solubilized in the cementation, as well as the last fractions of lead and the other impurities, etc., according to

$$Me^{2+}CaO+H_2O \rightarrow Me(OH)_2+Ca^{2+}. \quad (8)$$

After the separation of this precipitate, which gives a washed cake very rich in zinc, it is useful to proceed to its exploitation, for instance adding sulphuric acid (20) and preparing crystallized zinc sulphate (21).

The liquids (11) from this last separation devoid of heavy metals and containing calcium chloride (in case the neutralization and precipitation have been made with $CO_3Ca$ and $CaO$), are recycled as washing waters to the step of washing and separation (10) of the treated ashes, by which is obtained a saving of

about 90% of the water used in the overall process.

Since there is carried out a treatment of the ashes with chlorine and immediately the liquids are precipitated with $CO_3Ca$ and CaO, the liquids are continuously enriched with calcium chloride. The method by which this calcium chloride, continuously produced, is extracted, is the following. The slurry of treated ashes exiting from the last apparatus of washing and separation, exits with a content of liquid. It is remembered that this residual slurry contains about 36 litres of liquids for each 100 kgs of treated ashes. As a consequence, if the concentration of calcium chloride in the liquids is about 200 g/litre, the quantity of calcium chloride going in said 36 litres is approximately equal to the quantity of calcium chloride produced.

If for any reason with the residual slurry should be eliminated a smaller quantity of liquid, the concentration of the calcium chloride in the process liquids will be reduced, until with the new volume, smaller, of solution accompanying the residual slurry, the quantity of calcium chloride eliminated will be equal to that produced. On the contrary, if the slurry exits with more liquid, then it will eliminate more calcium chloride and the concentration of the calcium chloride in the liquids will be reduced, but as now more liquids will be eliminated with the residual slurry, the result will bring to eliminate as much calcium chloride as is produced. After all, this feature of the suggested process, allows the autoregulation of the calcium chloride in the recycled solutions and the system is automatically stabilized, provided there is any hypotetic cause separating it temporarily from a working concentration.

In the following, in order to facilitate the complete description of the process according to the invention, the following example will be given, which is intended by no means as a limitation but rather as an illustration of the process, and therefore within the scope of the present invention can be made all those variations which do not harm, alter, change or modify the essence of the described process.

The starting materials are 100 kg of ashes, with the typical following composition:

TABLE II

| Element | % |
|---|---|
| Iron | 57,5 |
| Sulphur (total) | 1,2 |
| Copper | 0,9 |
| Zinc | 2,8 |
| Lead | 1,3 |
| Arsenic | 0,52 |
| Silver | 0,0045 |
| Gold | 0,00014 |

After a proper grinding, as described (see Table I), a slurry is prepared in the reactor with one part of ashes and two parts of recycled and washing liquid, after which five kg of chlorine are injected. After completion of the reactions described, which takes from 1 to 2 hours, the slurry is sent to the following step of separation solid-liquid. The weights of valuable metals and of the other leached metals for 100 kg of ashes, are:

TABLE III

| Element | Weight | % Extracted |
|---|---|---|
| Iron | 0,40 kg | 0,70 |
| Copper | 0,74 kg | 82 |
| Zinc | 1,30 kg | 46 |
| Lead | 1,00 kg | 80 |
| Arsenic | 0,28 kg | 54 |
| Silver | 3,7 g | 82 |
| Gold | 0,11 g | 79 |

The slurry of this first separation solid-liquid contains a substantial quantity of liquid (30 litres for 100 kg of treated ashes), in which valuable metals are dissolved, and therefore this slurry must be washed and re-washed. The washing waters used are lyes of calcium chloride containing about 200 gram $Cl_2Ca$/litre, which are recycled and, after the washing, the liquids with the recovered valuable metals go back to the reactor in order to produce the subsequent slurry with fresh ashes.

The final slurry of the last washing and separation step exits soaked with a solution of calcium chloride containing less than 2% of the dissolved valuable metals.

The liquids with the valuable metals, go to a step of "Elimination and separation of impurities" (which is optional, since the process can also go to completion without it). In this step of elimination of the impurities, the liquids are subjected to a neutralization and precipitation with calcium carbonate. The liquids enter in this step add a pH of about 0,3 and the consumption of calcium carbonate in the liquids obtained in the treatment of 100 kg of ashes is of about six kg of $CO_3Ca$, and the weight and the kind of the eliminated impurities in this step, are:

TABLE IV

| Element | kgs eliminated for 100 kg of treated ashes |
|---|---|
| Iron | 0,4 |
| Arsenic | 0,27 |
| Lead | 0,73 |

After this elimination of the impurities, the liquids containing the valuable metals, now at a pH of 2,5 to 3, have the following composition:

TABLE V

| Element | Content |
|---|---|
| Iron | 5,7 ppm |
| Copper | 4,0 g/l |
| Zinc | 7,4 g/l |
| Lead | 1,5 g/l |
| Arsenic | 0,051 g/l |
| Silver | 0,0206 g/l |
| Gold | 0,63 g/l |

Both in the case the optional step of "Elimination and separation of impurities" is used or not, the liquids with the valuable metals go to a cementation step. In this cementation, the consumption of iron is 0,62 kg of iron for each 100 kg of ashes. In the case that the optional modification is not used, the cementation is carried out at an inlet pH of 0,3 and the consumption of iron is 1,26 kg of iron for each 100 kg of ashes.

In the following a table is given in which are listed the composition of the liquids at the exit from the cementation, the kgs of metals cemented and the percentages of metals recovered in relation to their initial contents in 100 kg of ashes.

TABLE VI

| Element | Composition of the liquid exiting from the cementation (g/l) | kg of metals cemented for 100 kg of ashes | % of recovered metal vs. contents in starting ashes |
|---|---|---|---|
| Iron | 3,42 | — | — |
| Copper | 23 ppm | 0,70 | 77,8 |
| Zinc | 7,4 | no cem. | — |
| Lead | 1,14 | 0,07 | — |
| Arsenic | 46 ppm | 0,86 g | — |
| Silver | 0,27 ppm | 3,6 g | 80 |
| Gold | less 0,1 ppm | 0,11 g | 78,6 |

The composition of the "shell" of copper is of the following kind:

TABLE VII

| Element | % |
|---|---|
| Copper | 81 |
| Lead | 8 |
| Iron | 2 |
| Arsenic | 0,09 |
| Silver | 0,42 |
| Gold | 127 ppm |
| Residue: Oxygen and other | |

The liquids exiting from the cementation step are subjected to a last step of "Recovery of the zinc and of the water". In this step first of all said liquids are precipitated with calcium-carbonate at a pH of 3 and then the pH is rised till 10, by addition of calcium oxide, CaO, so that iron, lead and zinc contained in these liquids are precipitated and result as hydroxides in the following quantities and for each 100 kg of treated ashes:

TABLE VIII

| Metal precipitated | kg |
|---|---|
| Iron | 0,6 |
| Zinc | 1,3 |
| Lead | 0,2 |

The percentages of these metals in these precipitated cakes are:

TABLE IX

| kg of metals (as hydroxides) | % of metals in the washed cakes |
|---|---|
| Iron 0,78 | 22,6 |
| Zinc 1,64 | 49,5 |
| Lead 0,21 | 7,6 |

As can be seen, these washed residues contain about 50% of zinc, which renders them well suited in that with the addition of sulphuric acid it is possible to prepare crystallized zinc sulphate, that is of high purity.

The liquids of this last step of the recovery of the zinc contain about 200 gram/litre of calcium chloride and are recycled to the steps of washing and separation already mentioned and thence to the reactor to produce the slurry with fresh ashes, etc.

The liquids exiting from the recovery step of the zinc have the following composition:

TABLE X

| Metal | ppm |
|---|---|
| Iron | 2,2 |
| Copper | 0,3 |
| Zinc | 0,3 |
| Lead | 3,0 |
| Arsenic | 11,0 |

Having fully described the nature of the invention, as well as the manner to realize it, it is understood that the indications previously given are subject to changes in details, provided they do not modify the basic concept of the invention.

## Claims

1. A process for the recovery of valuable metals, such as copper, silver, gold, zinc and other metals values from iron-containing ashes of normal and complex pyrites, characterized in that it comprises the following working steps:

a. subjecting the ashes (2) to grinding (1), in order to comminute them to a size less than 90 microns, at least 50% in weight of the solids having a dimension less than 25 microns;

b. preparing with the ashes so ground slurry with water or with the liquid (5) of recycling and washing from step (e);

c. treating the slurry (4) with a leaching agent (6) selected from chlorine or hypochlorites in order to dissolve the sulphide phases, the oxides of valuable metals and noble metals, while the iron oxides and the ferrites or the pseudo-ferrites remain undissolved;

d. separating the so treated ashes from the slurry liquid (8) containing the valuable metals;

e. subjecting the separated ashes to one or more washing steps (10) with water or with recycled liquids (11) from step (h) (17) and recycling the washing liquids (5) to step (b);

f. either optionally treating the liquids (8) coming from (d) first in a preliminary step (9) of elimination and separation of solubilised iron and impurities through the addition (13, 13') of basic substances to first neutralize the acidity of liquids (8) stemming from the leaching reaction with chlorine in step (c) and subsequently precipitate the dissolved iron with entrainment of substantially all the arsenic and removal of residual chlorine, and thereafter sending to purified liquids to a cementation step (g);

g. or directly treating the liquids (8) without prior purification step (9), in a cementation step (15) to precipitate the valuable metals by adding a suitable metallic cementation agent so as to obtain a liquid substantially devoid of valuable metals and a precipitated shell of metal values;

h. treating the liquids coming from step (g) (15) with a base (18) to recover zinc and iron solubilised during cementation step (15) by precipitation of hydroxides of zinc or iron, as well as the last fractions of lead and other minor elements;

i. separating the precipitate of step (h) from the liquid and recycling said liquid to step (e) (10) as washing liquid (11);

j. treating the separated precipitate (19) with sulfuric acid (20) to recover the zinc contained therein as Zn-sulfate (21).

2. A process according to claim 1, characterized in that should the pyrite ashes have a relatively high sulphur content exceeding a preestablished value, the ashes are subjected, prior to the grinding step (1), to screening and rejection (3) of coarser parts bigger than 3 mm in order to, in this manner, desulphurize the charge sent to the grinding step (1).

3. A process according to claim 2, characterized in that besides said previous screening, the screened ashes are treated in a rod mill (3') to aid the further separation of the residual iron sulphides.

4. A process according to any of the preceding claims, characterized in that the solid-liquid ratio used in the said slurry in step (b) has a value of about 1:2.

5. A process according to claim 1, characterized in that in the optional step (f) as basic substances are employed those selected from a group comprising the oxides, hydroxides, carbonates, of alkaline or alkaline-earth metals, or of other metals, such as zinc.

6. A process according to claim 5, characterized in that as basic substance it is employed calcium oxide or carbonate or zinc hydroxide.

7. A process according to claim 1, characterized in that in the step (f), the precipitation of the dissolved iron and the entrainment of the arsenic are effected at a pH of 2,5 to 3, eliminating as well the traces of chlorine by means of the carbon dioxide freed in the reaction and partially precipitating the lead as chloride.

8. A process according to claim 1, characterized in that the cementation step (g) (15) is effected with at least one of iron, zinc, lead.

9. A process according to claim 8, characterized in that a fractional cementation of the liquid containing valuable metals is effected, whereby an impure cement coming from a second cementation stage (normal cementation) is used, followed by a normal cementation with metals more electronegative than copper, silver and gold, such as iron, aluminium, zinc, lead and the like.

10. A process according to claim 1, characterized in that the base employed in step (h) (17) is selected from alkaline or alkaline-earth oxides, hydroxides and carbonates.

11. A process according to claim 10, characterized in that the base employed in step (h) (17) is selected between calcium carbonate and calcium oxide.

**Patentansprüche**

1. Verfahren zur Gewinnung wertvoller Metalle, wie Kupfer, Silber, Gold, Zink und andere aus eisenhältigen Abbränden normaler oder komplexer Pyrite, dadurch gekennzeichnet, daß es nachstehende Arbeitsschritte umfaßt:

a. Mahlung (1) der Abbrände (2), sodaß sie auf eine Größe von weniger als 90 Mikron zerkleinert werden, und mindestens 50 Gewichtsprozent der festen Bestandteile eine Abmessung von weniger als 25 Mikron erreichen;

b. Herstellung eines Schlammes aus den solcherart zermahlenen Abbränden mit Wasser oder mit der Rückgewinnungs- und Waschflüssigkeit (5) aus Schritt (e);

c. Behandlung des Schlammes (4) mit einem Laugungsmittel (6) ausgewählt aus Chlor oder Hypochlorit, um die Sulfidphasen, die Oxide wertvoller Metalle und Oxide von Edelmetallen zu lösen, während die Eisenoxide und die Ferrite oder Pseudoferrite ungelöst bleiben;

d. Abtrennung der so behandelten Abbrände von der Schlammflüssigkeit (8), die die wertvollen Metalle enthält;

e. Behandlung der getrennten Abbrände in einem oder mehreren Waschschritten (10) mit Wasser oder mit aus Schritt (h) (17) rückgewonnener Flüssigkeit (11) und Rückführung der Waschflüssigkeit (5) zu Schritt (b).

f. entweder wahlweise Behandlung der Flüssigkeit (8), die von (d) kommt zuerst in einem vorläufigen Schritt (9) zur Ausscheidung und Abtrennung von gelöstem Eisen und Unreinheiten durch den Zusatz (13, 13') von basischen Substanzen, um zuerst die Säuer der Flüssigkeit (8), die aus der im Schritt (c) erfolgten Laugungsreaktion mit Chlor stammt, zu neutralisieren und in weiterer Folge das gelöste Eisen unter Mitführung praktisch des gesamten Arsens und Beseitigung von Chlorrückstand zu fällen und danach Weiterleitung der gereinigten Flüssigkeit zu einem Zementationsschritt (g);

g. oder direkte Behandlung der Flüssigkeit (8) ohne vorhergehenden Reinigungsschritt (9) in einem Zementationsschritt (15), um die wertvollen Metalle durch Zugabe eines geeigneten Metallzementationsmittels abzusetzen, um auf diese Art eine von praktisch allen wertvollen Metallen befreite Flüssigkeit und eine sedimentierte Schale von wertvollen Metallen zu erhalten;

h. Behandlung der aus Schritt (g) (15) stammenden Flüssigkeit mit einer Base (18), um Zink und Eisen zu gewinnen, das während des Zementationsschritts (15) durch Fällung von Zink- oder Eisenhydroxiden gelöst wurde, ebenso wie die letzten Reste von Blei und geringfügige Anteile anderer Elemente.

i. Abtrennung des Niederschlags von Schritt (h) aus der Flüssigkeit und Rückgewinnung der genannten Flüssigkeit zu Schritt (e) (10) als Waschflüssigkeit (11);

j. Behandlung des abgesonderten Niederschlags (19) mit Schwefelsäure (20), um das darin enthaltene Zink als Zinksulfat (21) zu gewinnen.

2. Verfahren nach Anspruch (1), dadurch gekennzeichnet, daß in dem Fall, daß die Pyritabbrände einen relativ hohen Schwefelgehalt aufweisen, der einen vorbestimmten Wert übersteigt, die Abbrände vor dem Mahlvorgang (1) einer Siebung und Absonderung (3) größerer Teile über 3 mm unterworfen werden, um auf diese Weise das zum Mahlvorgang (1) weitergeleitete Beschickungsmaterial zu entschwefeln.

3. Verfahren nach Anspruch 2, dadurch gekennzeichnet, daß zusätzlich zum vorerwähnten Sieben, die gesiebten Abbrände in einer Stabmühle (3') behandelt werden, um eine weitere Abtrennung der restlichen Eisensulfide zu erreichen.

4. Verfahren nach einem der vorhergehenden Ansprüche, dadurch gekennzeichnet, daß das Verhältnis von Festkörper zu Flüssigkeit im genannten Schlamm im Schritt (b) ungefähr 1:2 beträgt.

5. Verfahren nach Anspruch 1, dadurch gekennzeichnet, daß bei dem wahlweisen Schritt (f) die verwendeten basischen Substanzen aus einer Gruppe ausgewählt werden, die Oxide, Hydroxide, Karbonate von alkalischen Metallen oder Erdalkalimetallen oder anderen Metallen, wie zum Beispiel Zink umfasst.

6. Verfahren nach Anspruch 5, dadurch gekennzeichnet, daß als basische Substanz Kalziumoxid oder -Karbonat oder Zinkhydroxid verwendet wird.

7. Verfahren nach Anspruch 1, dadurch gekennzeichnet, daß in Schritt (f) das Fällen des gelösten Eisens und die Mitführung von Arsen bei einem pH-Wert von 2,5 bis 3 durchgeführt wird, wobei sowohl die Spuren von Chlor durch das in der Reaktion freigesetzte Kohlendioxid als auch zum Teil das Blei als Chlorid gefällt wird.

8. Verfahren nach Anspruch 1, dadurch gekennzeichnet, daß der Zementationsschritt (g) (15) mit zumindest einem der Stoffe Eisen, Zink, Blei, durchgeführt wird.

9. Verfahren nach Anspruch 8, dadurch gekennzeichnet, daß eine fraktionierte Zementation der Flüssigkeit, die wertvolle Metalle enthält, erfolgt, wobei ein unreines Zementat, das aus einer zweiten Zementationsstufe (normale Zementation) stammt, verwendet wird, und darauf eine normale Zementation mit Metallen erfolgt, die eine höhere Elektronegativität aufweisen als Kupfer, Silber und Gold, wie zum Beispiel Eisen, Aluminium, Zink, Blei und ähnliche.

10. Verfahren nach Anspruch 1, dadurch gekennzeichnet, daß die in Schritt (h) (17) verwendete Base aus alkalischen oder erdalkalischen Oxiden, Hydroxiden und Karbonaten gewählt wird.

11. Verfahren nach Anspruch 10, dadurch gekennzeichnet, daß die in Schritt (h) (17) verwendete Base aus Kalziumkarbonat und Kalziumoxid gewählt wird.

**Revendications**

1. Procédé pour la récupération de métaux précieux, tels que cuivre, argent, or, zinc et autres métaux de valeur à partir des cendres contenant du fer de pyrites simples et complexes, caractérisé en ce qu'il comporte les stades suivants:

a) soumettre les cendres (2) à un broyage (1) afin de les réduire à une dimension inférieure à 90 µm, 50% au moins en poids des solides ayant une dimension inférieure à 25 µm;

b) préparer avec les cendres ainsi broyées une boue avec de l'eau ou avec le liquide (5) provenant du stade de recyclage et de lavage (e);

c) traiter la boue (4) avec un agent de lixivation (6) choisi parmi le chlore ou des hypochlorites afin de dissoudre les phases sulfures, les oxydes de métaux précieux et de métaux nobles, tandis que les oxydes de fer et les ferrites ou les pseudo-ferrites restent non dissous;

d) séparer les cendres ainsi traitées du liquide de la boue (8) contenant les métaux précieux;

e) soumettre les cendres séparées à un ou plusieurs stades de lavage (10) avec de l'eau ou avec les liquides recyclés (11) en provenance du stade (h) (17) et recycler les liquides de lavage (5) au stade (b);

f) soit traiter facultativement les liquides (8) provenant du stade (d) tout d'abord dans un stade préliminaire (9) d'élimination et de séparation du fer solubilisé et des impuretés par addition (13, 13') de substances basiques pour neutraliser d'abord l'acidité des liquides (8) provenant de la réaction de lixivation avec du chlore au stade (c) et précipiter ensuite le fer dissous avec entraînement de pratiquement tout l'arsenic et enlèvement du chlore résiduel, et envoyer ensuite les liquides purifiés à un stade de cémentation (g);

g) soit traiter directement les liquides (8) sans stade de purification préalable (9), dans un stade de cémentation (15) pour précipiter les métaux précieux par addition d'un agent de cémentation métallique approprié et de façon à obtenir un liquide pratiquement dépourvu des métaux précieux et une enveloppe précipitée des métaux de valeur;

h) traiter les liquides provenant du stade (g) (15) avec une base (18) pour récupérer le zinc et le fer solubilisés pendant le stade de cémentation (15) par précipitation des hydroxydes de zinc ou de fer, ainsi que les dernières fractions de plomb et autres éléments mineurs;

i) séparer le précipité du stade (h) du liquide et recycler le liquide au stade (e) (10) sous forme de liquide de lavage (11);

j) traiter le précipité séparé (19) avec de l'acide sulfurique (20) pour récupérer le zinc qui y est contenu sous forme de sulfate de zinc (21).

2. Procédé selon la revendication 1, caractérisé en ce que, si les cendres de pyrites ont une teneur en soufre relativement élevée, dépassant une valeur prédéterminée, les cendres sont soumises, avant le stade de broyage (1), à un criblage et à un rejet (3) des parties plus grossières supérieures à 3 mm afin de désulfuriser, de cette manière, la charge envoyée au stade de broyage (1).

3. Procédé selon la revendication 2, caractérisé en ce que, outre le criblage précédent, les cendre criblées sont traitées dans un broyeur à barres (3') pour faciliter la séparation ultérieure des sulfures de fer résiduels.

4. Procédé selon l'une des revendications précédentes, caractérisé en ce que le rapport des solides aux liquides utilisés dans la boue au stade (b) a une valeur d'environ 1:2.

5. Procédé selon la revendication 1, caractérisé en ce que, dans le stade facultatif (f), on utilise comme substances basiques celles choisies dans un groupe comprenant les oxydes, hydroxydes, carbonates de métaux alcalins ou alcalino-terreux, ou d'autres métaux tels que le zinc.

6. Procédé selon la revendication 5, caractérisé en ce qu'on emploie comme substance basique l'oxyde de calcium ou le carbonate de calcium ou l'hydroxyde de zinc.

7. Procédé selon la revendication 1, caractérisé en ce que, dans le stade (f), la précipitation du fer dissous et l'entraînement de l'arsenic sont effectués à un pH de 2,5 à 3, éliminant également les traces de chlore au moyen du gaz carbonique libérée dans la réaction et précipitant partiellement le plomb sous forme de chlorure.

8. Procédé selon la revendication 1, caractérisé en ce que le stade de cémentation (g) (15) est effectué avec au moins l'un des métaux suivants: fer, zinc, plomb.

9. Procédé selon la revendication 8, caractérisé en ce qu'on effectue une cémentation fractionnée du liquide contenant les métaux précieux, grâce à quoi un produit de cémentation impur provenant d'un deuxième stade de cémentation (cémentation normale) est utilisé, après quoi on effectue une cémentation normale avec des métaux plus électro-négatifs que le cuivre, l'argent et l'or, tels que le fer, l'aluminium, le zinc, le plomb et l'analogue.

10. Procédé selon la revendication 1, caractérisé en ce que la base employée au stade (h) (17) est choisie parmi les oxydes, hydroxydes et carbonates de métaux alcalins ou alcalino-terreux.

11. Procédé selon la revendication 10, caractérisé en ce que la base employée au stade (h) (17) est choisie entre le carbonate de calcium et l'oxyde de calcium.

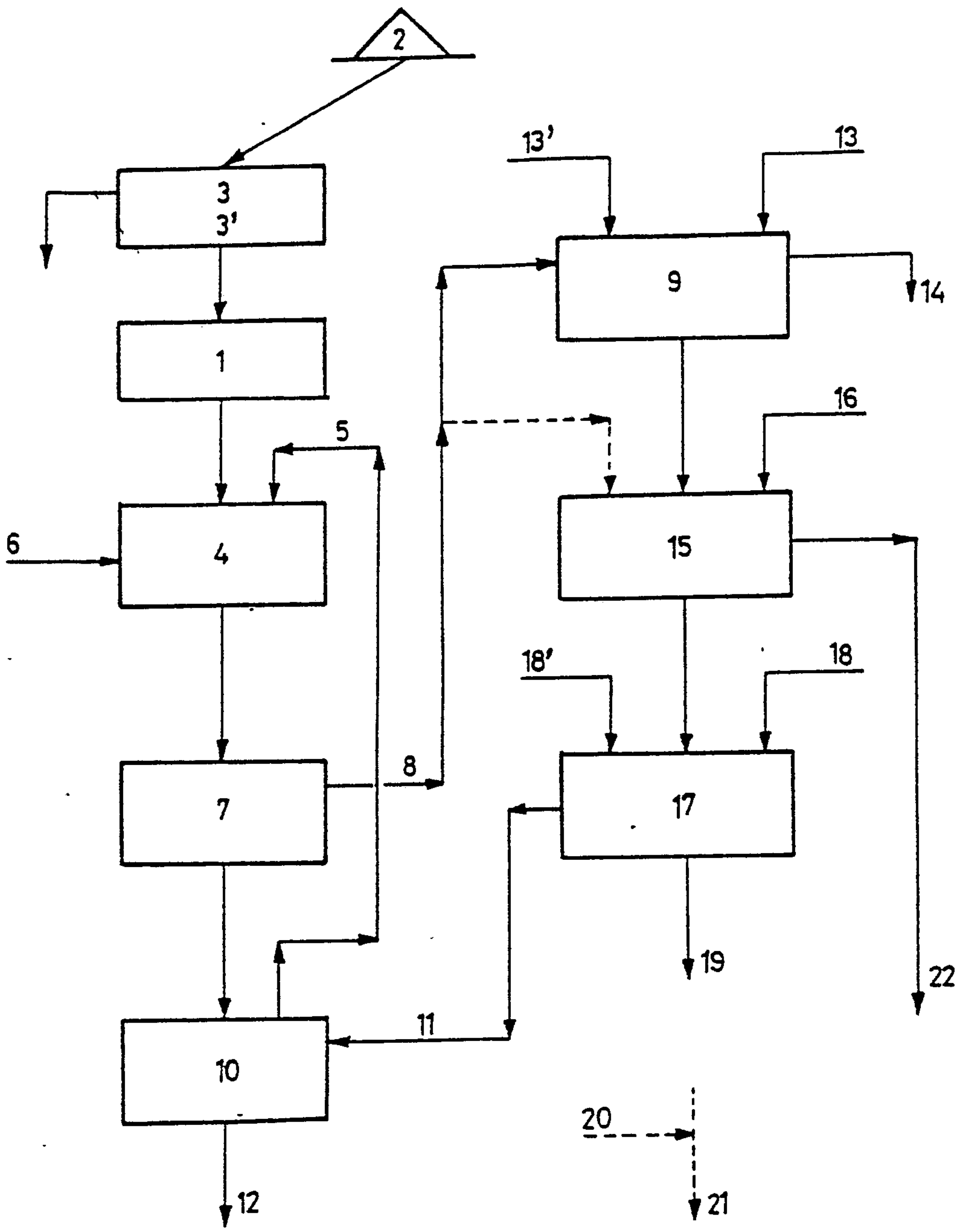
2
3
3'
1
4
5
6
7
8
9
10
11
12
13'
13
14
15
16
17
18'
18
19
20
21
22